(19) Europäisches Patentamt
European Patent Office
Office européen des brevets

(11) EP 4 589 833 A1

(12) EUROPEAN PATENT APPLICATION

(43) Date of publication:
23.07.2025 Bulletin 2025/30

(51) International Patent Classification (IPC):
$H02M\ 7/483$ (2007.01)

(21) Application number: 24152616.9

(52) Cooperative Patent Classification (CPC):
H02M 7/4835

(22) Date of filing: 18.01.2024

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Maschinenfabrik Reinhausen GmbH
93059 Regensburg (DE)

(72) Inventors:
• Gercek, Cem Özgür
  93098 Mintraching (DE)
• Munoz Aguilar, Raul Santiago
  93055 Regensburg (DE)

(54) **SYSTEMS AND METHODS FOR OPERATION OF A CONVERTER**

(57) An operational optimisation system for a Modular Multilevel Converter (MMC), comprising:
a converter (10) comprising a plurality of submodules (16), each of the plurality of submodules (16) configurable between an active and a bypassed configuration;
a transformer (18) for connecting the converter to an AC electrical network (14) comprising a first transformer side and a second transformer side, wherein the first transformer side is electrically connected to the converter (10), and the second transformer side is electrically connected to an AC electrical network (14);
a tap changer (28) configurable to connect to, and selectably alternate between, a plurality of tap positions on the transformer (18);
a sensor arrangement (22) comprising at least one sensor configured to measure operational data relating to the converter (10);
a control module (20) for receiving operational data from the sensor arrangement (22) and configured to determine a desired operational mode of the system based on the operational data received from the sensor arrangement (22) and a desired system output;
wherein the desired operational mode is defined by the number of the plurality of submodules (16) in the active configuration, the number of submodules (16) in the bypassed configuration, and the tap position of the tap changer (28), and corresponds to the operational mode in which the system power losses are minimised while providing the desired system output.

Figure 1

EP 4 589 833 A1

**Description**

Described are systems for operation of an electrical converter (e.g. a modular converter), in particular an MMC (Multi-level Converter) and which may be considered to be an operational optimisation system for operation, and methods for operation of an electrical converter. The systems and methods involve the coordination of a tap changer position of a coupling transformer for the MMC, where the MMC is operable with redundant submodules, which may minimise losses and/or allow greater range of availability of operation of the system within acceptable operating parameters (e.g. during unbalanced operation).

Traditionally, most power transmission and distribution has been done in AC, but nowadays there is an increasing trend towards High Voltage Direct Current (HVDC) transmission, in some instances creating a need to accommodate a hybrid system of both AC and DC power transmission and distribution.

In order to achieve DC power transmission, as well as a connection between AC and DC systems, use of a Modular Multi-level Converter (MMC) is a standard approach within the power converter industry. An MMC may also be used in medium-voltage (MV) drive applications, including power distribution, and can also be used as a Static Synchronous Compensator (STATCOM) to provide reactive power and even as an Active Power Filter to filter out a variety of unwanted harmonics in a network.

Typically, an MMC converter is formed by one group of series-connected cells (also referred to submodules, SMs) per phase, which may be arranged in one or more "arm" or "leg" configurations. Generally, the selected number of cells is deliberately chosen higher than the required number of cells for producing an output voltage. In other words, for being compatible to a specific grid rated voltage V, the number of required cells in operation is denoted by the letter n. Nevertheless, each "arm" or "leg" may be composed by n + m cells, where m represents a number of redundant cells. The redundant cells provide an additional availability within the MMC in which up to m cells can be bypassed, without hindering the converter performance.

Where there is good functionality of the cells in an MMC, i.e., all cells in the MMC are considered to be "healthy", the MMC typically functions with n cells as are required for operation, while the redundant cells m are bypassed and remain unused. Should one of the required cells n develop a fault and become "unhealthy", this cell is then able to be bypassed and one of the redundant cells brought online, effectively replacing the unhealthy required cell with a redundant cell.

Although the required number of cells may be considered to be n when the MMC topology is conceived, the varying demands on the MMC can result in operating conditions in which the optimal number of required cells differs from that proposed upon conception of the MMC. This may be due, for example, to factors and imperfections external to the MMC that may be difficult to foresee. In some conditions, although the MMC may be able to function and produce a desired output while operating the components of the MMC within their rated operational capability, performance of the MMC may be suboptimal. The result of a suboptimal performance may result in, for example, increased power losses within the MMC, and a higher-than-desirable energy consumption within the MMC.

While a decrease in power losses within an MMC may be achieved by increasing the efficiency of the individual components within the MMC, this option is typically expensive, and components of very high efficiency can often be time consuming and costly to acquire and install. The efficiency of such components also has an upper limit defined by the technology available at the time.

There is therefore a need to provide a converter having the capability to adapt and optimise its performance according to operating conditions. An object of the present invention is therefore to provide a power loss optimisation system for a modular converter such as an MMC that has a high level of availability.

In addition, changes to the number of available cells may result in unbalanced operation within the system (e.g. unbalanced three-phase voltage), while external factors such as connection to an AC network that is experiencing unbalanced operation may also have an effect on the operation of the system, possibly requiring operation of the system to be stopped until the cause of the unbalanced operation has been remedied.

It is a further object of the present invention to provide a system of operation of a converter to improve the system availability of the converter in conditions involving unbalanced operation (e.g. of the system or of a connected AC network), for example by providing additional means for mitigating against conditions involving unbalanced operation.

The present invention is described according to the following aspects. A first aspect relates to an operational optimisation system for an MMC, and comprises a converter, a transformer, a tap changer, a sensor arrangement and a control module. The converter comprises a plurality of submodules, each of which are configurable between an active and a bypassed configuration. Each of the submodules may be independently configurable between the active and the bypassed configuration. The transformer (which may be termed the converter transformer) is suitable to connect the converter to an AC electrical network, and comprises a first transformer side and a second transformer side, wherein the first transformer side is electrically connected to the converter, and the second transformer side is electrically connected to an AC electrical network. The tap changer is configurable to connect to, and selectively alternate between, a plurality of tap positions on the transformer. The tap changer may be configured to selectively alternate between tap positions independent of each of the phases. In such a case, an independent tap changer may exist that corresponds to each phase (e.g. each of three phases). The tap changer may comprise at least four tap positions. The sensor arrangement comprises at least one sensor configured to measure operational data e.g. relating to the converter or that may be used to determine operation of the converter, and the control module is suitable for receiving operational data from the sensor arrangement and is configured to determine a desired operational mode of the converter based on both the operational data received from the sensor arrangement as well as a desired system output. The sensor arrangement may be configured to measure or may be capable of measuring at least one of the current and voltage in a connected AC network, or may be configured to provide data to be used to calculate or estimate at least one of the current and voltage in a connected AC network. The desired system output may be the output (e.g. the voltage, current, or the like) that balances the converter side of the transformer with the network side. Here, the desired operational mode is defined by the number of the plurality of submodules in the active configuration, the number of the plurality of submodules in the bypassed configuration, and the tap position of the tap changer, and corresponds to the operational mode in which the system power losses are minimised, as determined by the control module, while providing the desired system output. As is explained in the preceding paragraphs, the control module may determine the desired operational mode through use of an equation, which may be an empirical equation. The number of submodules in the active configuration and the number of submodules in the bypassed configuration may be able to be expressed, for example for the purposes of an equation, as two numbers corresponding to both the active and passive submodules, or may be able to be expressed as a single number, e.g. in the form of a ratio, which may contain the same information, especially if the total number of submodules in the system is known. A second aspect relates to a system for operating a Modular Multilevel Converter (MMC) (e.g. an operational optimisation system). The system of the second aspect comprises:

a converter comprising a plurality of submodules, each of the plurality of submodules configurable between an active and a bypassed configuration;
a multi-phase (e.g. a three-phase) transformer for connecting the converter to an AC electrical network comprising a first transformer side and a second transformer side, wherein the first transformer side is electrically connected to the converter, and the second transformer side is electrically connected to an AC electrical network;
a plurality of tap changers configurable to connect to, and selectably alternate between, a plurality of tap positions where one of the plurality of tap changers corresponds to each phase of the multi-phase transformer, the tap changer being configurable to alternate between the plurality of tap positions of a first phase independently of a second phase (and/or a third phase);
a sensor arrangement comprising at least one sensor configured to measure operational data relating to the converter;
a control module for receiving operational data from the sensor arrangement and configured to detect, using the received operational data, unbalanced operation in at least one of the first transformer side and the second transformer side, and to determine a desired operational mode of the system based on the operational data received from the sensor arrangement and a desired system output;
wherein the desired operational mode is defined by the tap position of the tap changer on each phase of the multi-phase transformer, and optionally by the number of submodules in the active configuration and in the bypassed configuration, and may correspond to the operational mode in which the operational unbalance on one of the first or second sides of the transformer is able to be transformed to a reduced operational unbalance (e.g. reduced to a level in which operation is possible) of the other of the first or second side of the transformer, thus enabling continued operation of the system despite operational unbalance on one side of the transformer. A reduced operational unbalance may correspond to an operational mode in which the difference in the voltage magnitude between each phase is reduced. Optionally, the system power losses may be minimised while providing the desired system output. The desired operational mode according to the second aspect may relate to an operational mode in which unbalanced operation across the transformer is reduced (e.g. compared to normal operation, and/or compared to operation in which the tap position is the same for each phase of the multi-phase transformer). The desired operational mode may be a mode that enables operation of the MMC in both balanced and unbalanced grid voltage scenarios (i.e. balanced and unbalanced voltage at one side of the transformer). In the case of a situation in which e.g. the AC electrical network or grid voltage is unbalanced, the desired operational mode may be or correspond to a tap position of the tap changer on each phase of the multi-phase transformer so as to permit operation of the system despite e.g. the unbalanced voltage in the AC network. Each phase of the converter may therefore comprise a dedicated and independent tap changer. The described system may provide an additional means for mitigating against unbalanced operation on one side of the transformer and therefore enable operation in conditions of high operational unbalance that may have previously required restriction or cessation of operation.

In the described aspects, determination of the desired operational mode may be performed in the case that the operational data received by the control module indicates unbalanced operation on at least one of the first transformer side and the second transformer side. In some examples, the control module may be programmed with an estimation algorithm, and at least some or all of the received operational data may be input into the estimation algorithm so as to provide estimated operational data. In this case, the estimated operational data (either alone or with directly measured operational data) may be used to determine the desired operational mode, and may be used to provide an indication of unbalanced operation in the converter.

In the described aspects, the sensor arrangement may be or comprise a sensor or sensors that are present (e.g. typically present) in an MMC and/or a sensor or sensors that are present (e.g. typically present) in the tap changer, and therefore the described system may not require any additional sensors. Alternatively, the sensor arrangement may comprise additional sensors (e.g. sensors that are not typically present in an MMC and/or tap changer) that are included in order to facilitate function of the described system by providing operational data that may be used directly by the control unit (i.e. without the use of an estimation algorithm). In some examples, operational data from the sensor arrangement may be input into the aforementioned estimation algorithm so as to provide estimated operational data, which may be used in the detection of unbalanced operation on at least one of the first and second transformer side by the control module. In other examples, operational data received from the sensor arrangement may be used directly (i.e. without the use of an estimation algorithm) to detect unbalanced operational on at least one of the first and second transformer side.

In use, the system can obtain information relating to the operating conditions of the converter and, for example, an AC electrical network connected to the converter via the transformer and, if necessary, adjust operation of the converter so as to improve (e.g. widen) availability (and therefore enable optimal performance) of the system, for example by minimising power losses therein and/or increasing the availability of the system by matching the voltage on the first transformer side with the voltage on the second transformer side so as to reduce, restrict and/or prevent the effect of unbalanced operation on the system, for example as a result of unbalanced operation of the AC electrical network or within the system. The sensor arrangement may be used to measure parameters of the system, such as a voltage or voltages (e.g. the converter line-to-line voltage, phase voltage of a connected AC electrical network, or the like), a current or currents in the converter, or the like, and provide this data to the control module such that an operational mode may be determined (e.g. a desired operational mode) in which power losses are minimised and/or in which availability of the system is increased as a result of the effect of unbalanced operation being reduced, restricted or prevented. For example, the system according to the first aspect may be used to minimise power losses, while the system according to the second aspect may be used to increase the system availability. The determined desired operational mode may be provided to a user, for example, on a display.

In the converter, the power losses may be derived mainly from the submodules. The submodules may facilitate and/or enable the conversion between AC and DC power. The power losses may be proportional to the operating current and voltage of the submodules. Each of the submodules may be or comprise an electronic switch. In this case, the power losses may additionally be proportional to the switching frequency of the submodules.

Although power losses may be incurred for a variety of reasons, two important categories of power losses in a converter are switching losses and conduction losses. Generally, the switching frequency, current and voltage each impact the switching losses, while the conduction losses are generally only significantly impacted by the current in the converter. The temperature is also a factor which may affect the losses in a converter, although this may be controlled by other means and therefore will not be discussed herein. While a minimum switching frequency may be required in order to provide sufficiently high resolution of conversion in the converter and therefore may be difficult and/or undesirable to modify, the submodules may be operated at variable levels of voltage and current to produce the desired output power by using the tap changer to match the voltage of the converter to the required voltage of a connected AC electrical network.

Since each of the submodules is able to be configured between an active and a bypassed configuration, the number of active submodules in the converter may also be varied. Losses produced by a bypassed submodule may be diminished compared to those of an active submodule, and therefore configuring one, or more than one (e.g. two, three, four, etc.) submodules to the bypassed configuration may reduce the power losses in the system. Conversely, maximising the number of submodules in the active configuration may reduce the voltage and/or current with which each individual submodule needs to be operated for a given output power, thereby reducing both the switching and the conduction losses throughout the converter circuit while providing a desired level of output power. There is therefore a balance to be struck between maximising the number of submodules in the bypassed configuration to achieve a power loss reduction in individual modules, and reducing the voltage and current with which the active submodules are operated, thereby reducing the power losses throughout the active submodules in the converter. Striking such a balance involves determining an optimal number of submodules to be configured to the active configuration such that the power loss reduction received by configuring a submodule to the bypassed configuration does not result in an increase in power losses across the active submodules that is higher than the reduction gained by configuring the submodule to the bypassed configuration. Striking such a balance involves determining the desired operational mode in which the power losses are optimally minimised while maintaining the desired system output. The desired operational mode therefore relates to the number of submodules in the active configuration and the number of submodules in the bypassed configuration, and an appropriate tap position of the tap changer to match the operation on the converter side of the transformer to that of a connected AC network. Matching the operation may involve matching the voltage on the converter side of the transformer to that of a connected AC network and/or may depend on the real and reactive power required at the side of the transformer connected to the AC network. The required real and reactive power of a connected AC network may be variable with time, and therefore the tap position of a tap changer should be updated accordingly. The desired operational mode may therefore also vary depending on the desired system output. The desired system output may be expressed as a desired output power, or a desired output power range, and/or may also be expressed as a desired output real and reactive power or range thereof.

A further situation in which power losses are incurred may be that in which the system is being affected by an unbalanced voltage. For many reasons, operation of a converter and the associated transformer with an unbalanced voltage creates undesired power losses and may additionally require cessation of the operation of the system. In the case of a three-phase transformer (for example, as described herein) these losses may be as a result of neutral displacement caused by the unbalanced voltage, although it will be understood that other sources of power loss are also present in this scenario.

In the case where a connected AC network is unbalanced, the tap position of the tap changer may be used to match the voltage of the converter side of the transformer with that of a connected AC network, thereby providing a means for permitting the converter to function in a balanced configuration, and reducing power losses therein while improving availability by permitting sustainable operation of the system despite the unbalanced AC network. Sustainable operation may refer to operation in which the system is able to be operated to perform a desired function, without cessation or restricted operation of the system being necessary as a result of the unbalanced AC network, and may correspond to the case in which the voltage on the first transformer side is unbalanced while the voltage on the second transformer side is balanced, or may be "less unbalanced" (e.g. the differences between the voltage magnitudes of the phases may be reduced) than on the first transformer side.

In some cases, one or a plurality of submodules may be defective or non-operational, thereby forcing operation of the system with these submodules in the bypassed configuration. As will be described in more detail herein, this scenario may result in operation of the converter with an unbalanced voltage, which may be a disadvantageous form of operation and thus may render the system unavailable and/or inoperable. In this scenario, one solution may be to operate some "healthy" submodules (i.e. submodules that are non-defective or fully operational) in the bypassed configuration in order to balance the voltage in the converter. However, this can lead to a non-desired operational mode which may incur higher-than-necessary losses in the system, for example. An alternative solution may instead be to operate the system with an unbalanced voltage on the converter side of the transformer and configure the tap position of the tap changer so as to obtain a balanced voltage on the connected AC network side of the transformer despite the unbalanced voltage on the converter side of the transformer. This solution enables at least some of the unbalanced voltage on one side of the transformer to be managed by the tap changer, and grants the system a high level of operation (e.g. sustainable operation) in sub-optimal conditions, and thus provides a high degree of system availability across a range of operating conditions. A result of this solution is that operation of the system in a non-desired operational mode is avoided as far as possible, and also the power losses associated therewith are reduced as far as possible by enabling the possibility of using the highest number of healthy submodules possible.

In some examples, the converter of the power loss optimisation system may comprise three groupings of submodules, each grouping comprising at least one submodule. In such an example, each grouping may correspond to an AC phase, e.g. an AC phase of the voltage on the first side (e.g. the converter side) of the transformer, thus facilitating use of the converter to convert AC to DC, and vice versa. Each grouping may comprise an identical number of submodules, although it should also be appreciated that one or more groupings comprising a different number of submodules is also a conceivable configuration. The submodules in each grouping may be connected in series. Each grouping may be electrically connected to one phase winding in the transformer on the converter side thereof. The transformer may therefore comprise three phase windings on the first side thereof. The transformer may comprise three opposite phase windings on the second side thereof.

Unbalanced operation across the transformer may be or comprise an unbalance across one or a plurality of phases of the transformer relative to the other phases. The unbalanced operation may be an unbalanced voltage on one or two phases, for example.

The desired system output may correspond to the tap position of the tap changer being positioned such that the voltage on the first side of the transformer is balanced with the voltage on the second side of the transformer, or such that the degree of unbalance (e.g. the difference in voltage magnitude between the phases) is reduced as compared to the original tap position. This may permit the system to continue to operate despite unbalanced operation on one of the first and second side of the transformer.

The desired operational mode may be mode in which the tap position of the tap changer on each phase of the multi-phase transformer is positioned so as to provide a matching voltage as required. For example, in the case of a connected AC network having unbalanced operation (or in case of the MMC having unbalanced operation), the desired operational mode may that in which the tap position of the tap changer is adapted so as to match (e.g. match, or obtain a value as similar as possible to) the operation of the connected MMC (e.g. so as to match the voltage of the connected MMC), thus permitting the system to continue to operate despite unbalanced operation on one of the first and second side of the transformer.

The sensor arrangement may comprise e.g. a voltage and/or current measuring device, which may be adapted to measure the voltage and/or current in the MMC and also in the connected AC network. The sensor arrangement may be located in, or form part of, the MMC and/or the tap changer. The sensor arrangement may be configured to provide such data to the control module, to enable to control module to calculate the desired operational mode. In some examples, calculation of the desired operational mode may be, for example, an iterative and/or empirical process that may involve receiving data from the sensor arrangement based on differing tap positions of the tap changer. The control module may determine the desired operational mode based on empirical measurements for each tap position of the tap changer.

The desired operational mode may additionally be based on the number of submodules in the active and/or bypassed configuration. For example where it is known that, having a specific number of modules in the active and/or bypassed configuration, a specific tap position for each phase of the multi-phase transformer will match the MMC operation with that of the AC network, the control module may provide the desired operational mode based on that tap position and number of active and/or passive submodules.

The tap changer may comprise a plurality of tap positions, for example, four, five, six or more tap positions.

Each grouping may comprise an "arm" of the converter. In some examples, each arm may comprise a plurality of submodules. For example, each arm may comprise between 6 and 24 submodules, for example between 6 and 18 submodules, for example 7, 8 or 12 submodules.

The plurality of submodules may be in the form of a plurality of electronic switches, wherein each submodule represents one electronic switch. In some examples each of the plurality of submodules may comprise a full bridge or a half bridge circuit. The choice of a full bridge or a half bridge circuit may provide the capability to convert AC to DC, and vice versa. In some examples, the plurality of submodules may comprise only full bridge circuits, only half bridge circuits, or a combination of both full bridge and half bridge circuits.

In some examples, one, some, or each of the plurality of submodules may comprise a bypass mechanism, which may alternatively be termed a bypass arrangement. The bypass mechanism may permit each submodule to be selectively bypassed, thereby allowing or facilitating the converter to function without the operation of the bypassed module. In some examples, a plurality of submodules may comprise a bypass mechanism, for example two or more submodules may comprise a single bypass mechanism to permit bypass of both or all of said submodules, thereby allowing a plurality of modules to be incorporated into the function of the converter or removed from the function of the converter simultaneously.

A bypass mechanism may be connected in parallel with a submodule, or plurality of submodules. The bypass mechanism may be connected in parallel with a submodule on the AC side of the converter. The bypass mechanism may be in the form of an electronic switch. The bypass mechanism may be in the form of a thyristor or vacuum contactor. Where a selection or all of the submodules of the converter comprise a bypass mechanism (e.g. individually comprise a bypass mechanism), each of the bypass mechanisms may be identical (e.g. all the bypass mechanisms may be in the form of a thyristor, or a vacuum contactor) or at least one of the bypass mechanisms may be of a different type than the others (e.g. one bypass mechanism may be a vacuum contactor, where the remaining bypass mechanisms are in the form of thyristors, or vice versa). Each bypass mechanism may be of the same rated voltage and current as the corresponding submodule that is being bypassed.

In some examples, each of the plurality of submodules may be or comprise an insulated gate bipolar transistor (IGBT). Use of an IGBT as or incorporated into a module may provide a rapid and highly efficient switching frequency, for example in a full bridge or half bridge circuit. It should be noted, however, that the plurality of submodules need not be limited to being or comprising IGBTs, and may comprise any other appropriate element, such as a transistor, e.g. a MOSFET.

The sensor arrangement may comprise a plurality of sensors. In some examples, the sensor arrangement may comprise at least one of a current measuring device (e.g. a current transformer or transducer), a voltage measuring device (e.g. a voltage transformer or transducer) and a temperature gauge. In some examples, the sensor arrangement may comprise all of a current measuring device, a voltage measuring device and a temperature gauge. The sensor arrangement may comprise a voltage measuring device, or a plurality of voltage measuring devices, configured to measure or determine the line-to-line voltage in the converter.

The converter may be a phase converter. The converter may be configured to convert AC to DC and, for example, may be configured to convert three-phase AC to DC. The converter may receive AC power from an AC network via a transformer (e.g. a second side of the transformer). For example, converter may receive AC power from an electrical grid. The converter may comprise at least one full-bridge and/or at least one half-bridge. At least one, a selection of, or all of the plurality of submodules may be or comprise a full-bridge and/or a half-bridge circuit. In some examples, the converter may be or comprise a modular multilevel converter (MMC) for converting AC to DC and vice versa.

In some examples, the control module may be configured to determine the power loss in the system for a plurality of operational modes, and may be configured to select the operational mode having the lowest power loss as the desired operational mode. The power loss in the system may be calculated offline or online. For example, the control module may be able to calculate the power losses in the converter through use of equations stored therein, e.g. in a memory unit therein. Storing equations, and/or data relating to equations, in a memory unit and performing calculations using said equations in advance of the operation of, or use in combination with, the circuit may be considered an example of offline calculations of the power loss in the system. Alternatively, data may be measured real-time and used to calculate power losses in the system. For example, the current and voltage in a submodule may be measured real-time, and a junction temperature calculated to provide a value of power losses in the submodule. The value of the power losses may be taken from known values (e.g. empirically generated values) of power loss in a submodule operating with the measured current and voltage, and calculated temperature. The control module may therefore be used to both calculate and recommend (e.g. to a user via a display), and possibly enact within the system (e.g. reconfigure the system to), the operational mode having the lowest power loss, thereby optimising the efficiency of the system. Where the control module is able to enact the operational mode within the system, the control module may be able to configure each submodule between the active and the bypassed configurations as necessary, and optionally alter the tap position of the tap changer, e.g. via a mechanism that may be used to vary the tap position of the tap changer.

In some examples, the power losses in the system may be determined using the following equation:

$$PL = (a*I^b)* (1+\alpha T) + c*I^d*V^e*f_{sw}*(1+\beta T) \qquad [Equation\ 1]$$

where I is the operating current (rms), V is the DC link voltage, T is the temperature (e.g. the measured temperature at the semiconductor junction or the measured heatsink temperature of the transistor), a is the DC gain, b is the DC current quotient, c is a switching loss multiplier, d is the switching current quotient, e is the switching voltage quotient, $f_{sw}$ is the switching frequency, $\alpha$ is the temperature coefficient for conduction losses and $\beta$ is the temperature coefficient for switching losses. In such examples, the power losses may be calculated (e.g. through use of the control module) by taking the above parameters into account, and the desired operational mode may be selected on this basis. The above equation may be considered to be an empirical equation. It should be noted that it may be possible to determine the desired operational mode on another basis, for example in the case where there is unbalanced voltage in the AC electrical network, it may be desirable to determine the desired operational mode taking information relating to the voltage and/or voltage balance in a connected AC network (and/or in the converter itself) into account. Further, it may be possible and/or desirable to adapt the above equation, for example by incorporating a weighting of one or more parameters into the power loss configurations, in order to arrive at an adapted equation for the calculation of power losses within the circuit. Additional parameters which may also be of importance may be incorporated into the equation, for example depending on the exact use of the system, different parameters may be of differing value. In some examples a parameter relating to the phase angle of the current may be incorporated, thereby permitting a difference in the angles of AC output voltage and current to be taken into account, which may have an effect of the use of an IGBT. This angle may affect the losses (e.g. conduction and/or switching losses) in the submodules, for example as a result of an increased or decreased usage of a diode/switch therein. Other parameters that may be included are gate turn-on and turn-off resistances, which may also affect switching losses, and stray inductance relating to the DC-link.

In some examples, the power losses in the system may be determined using the following equation:

$$PL = a*I^b + c*I^d*V^e*f_{sw} \qquad [Equation\ 2]$$

In this case, the above equation is a simplification of Equation 1, which takes into account only parameters relating to the system that a user may be able to control.

In some examples, the sensor arrangement may comprise a plurality of sensors configured to measure a parameter external to the converter. For example, the sensor arrangement may comprise a voltage transformer/transducer configured to measure the voltage of an AC electrical network connected to the transformer and/or a current transformer/transducer configured to measure the current on the first and/or second side of the transformer. The sensor arrangement may be configured to measure the phase voltage of an AC electrical network connected to the transformer, and may be able to determine if the phase voltage is balanced or unbalanced. In such examples, the system may be configured to determine a desired operational mode based on the operation of an external AC electrical network.

In some examples, the tap changer may be configured to operate independently on each phase provided by the transformer. For example, the transformer may be a three-phase transformer, and therefore the tap changer may be configured to operate independently on each of the three phases of the transformer. The tap changer may be configurable to increase and/or decrease the number of turns corresponding to one, a selection of (e.g. two) or all phases of the transformer, for example by changing between a plurality of predetermined tap positions on the tap changer. The tap changer may be configured to operate independently on each of three phases provided by the transformer. As such, the system may be able to provide a desired operational mode that may involve changing the tap position of the tap changer on one, some or all of the three phases provided by the transformer (e.g. stepping up or stepping down each phase by an optionally differing amount), if necessary, thereby permitting operation in conditions in which the phase voltage is unbalanced (e.g. where the phase voltage in the converter is unbalanced and/or where the phase voltage in a connected AC network is unbalanced). The tap position on each phase may be changed to a desired position by a user, e.g. as a result of a recommendation provided to the user by the control module, or by an automated device, mechanism or the like, that may be controlled by the control module.

To provide an example, in the case where there is a voltage unbalance in one phase (e.g. in a connected AC network), the system may be able to provide a desired operational mode that enables balanced operation on the other side of the transformer, or that reduces or restricts unbalanced operation on the other side of the transformer. Reduced unbalanced operation on one side of the transformer may be identified by the voltage and/or current on one side of the transformer being adjusted so as to be more balanced than that on the other side of the transformer, e.g. having more uniform voltage magnitudes in each phase. In the instance where an AC electrical network is unbalanced (e.g. comprises an unbalanced voltage), the tap changer may be configurable to modify a tap position relating only to one phase (e.g. to a phase that is unbalanced relative to the other phases), or alternatively to more than one or to all phases, thereby enabling balanced operation on the converter connected side of the transformer (or reducing unbalanced operation to a sustainable extent where the system continues to be operable), despite the unbalanced voltage provided by the AC electrical network. For instance, where the AC electrical network comprises a phase that is of reduced voltage relative to the other AC phases, the tap position of the tap changer may be changed only in relation to this phase (e.g. repositioned so as to reduce the number of turns relating only to one phase), such that the voltage of the phases in the converter (e.g. on the converter side of the transformer) is balanced. Alternatively, the tap position of the tap changer on more than one or all phases may be changed in response to the detection of the unbalanced voltage provided by the AC network. Therefore, the system may be used to enable operation to continue despite unbalanced operation within the system and/or external to the system, which may be conditions that are otherwise outside of the control of the system.

Where the transformer is a three-phase transformer, the desired operational mode may correspond to an operational mode in which e.g. power losses are minimised and/or the operation of one of the first transformer side and the second transformer side is unbalanced, and the tap position of the tap changer or changers is amended so as to adjust the operation on the other side of the transformer to be balanced or less unbalanced. Unbalanced, or unbalanced operation, may refer to the situation in which either the voltage or the current, or both, is unbalanced on each side of the transformer.

A third aspect relates to a method for power loss optimisation of an electrical power converter, for example in accordance with the first aspect. The method comprises electrically connecting the electrical power converter to an AC electrical network via a transformer, operating a plurality of submodules of the converter between an active and a bypassed configuration, and operating a tap changer between a plurality of tap positions of the transformer. Further, the method comprises generating operational data by a generation means (e.g. through use of a sensor arrangement configured to measure operational data of the converter, through use of an estimation algorithm, or through use of both of the aforementioned), providing the generated operational data to a control module, determining a desired operational mode of the converter based on the received operational data and a desired system output. In this case, the desired operational mode is defined by a desired number of submodules in the active configuration, a desired number of submodules in the bypassed configuration, and the tap changer having a desired tap position. The method also comprises operating each of the plurality of submodules in either the active or bypassed configuration, and the tap changer in the desired tap position, based on the determined desired operational mode such that power losses in the converter are minimised.

In some examples, the method may comprise determining the power loss for a plurality of operational modes providing the desired system output, and selecting the operational mode having the lowest power loss as the desired operational mode. As such, the method may be used to select the operational mode having the lowest power loss. In some examples, the method may comprise using the control module to select the operational mode having the lowest power loss as the desired operational mode, and may further comprise enacting the desired operational mode within the system. For example, the control module may be configured to switch at least one, a selection of (e.g. two) or all of the submodules between the active configuration and the bypassed configuration and/or may be configured to modify the tap position of a tap changer of the coupling transformer of the converter. The method may comprise configuring a bypass of a submodule to an "on" configuration, and optionally switching a submodule to a bypassed configuration, for example by turning off a component or components in a full bridge or half bridge circuit that is or forms part of the submodule. This may comprise switching an IGBT, or multiple IGBTs to an "off' configuration. The desired system output may be, for example, a desired output power which may comprise a desired real and reactive power.

In some examples, the method may comprise measuring a parameter relating to an AC electrical network connected to the transformer. The parameter may be, for example, the voltage, current, real and reactive power, or the like of a connected AC network. As such, the sensor arrangement may be able to provide operational data to the control module relating to the operation of a connected AC electrical circuit, and provide a desired operational mode based on this operational data, e.g. additionally based on this operational data, as well as operational data relating to the optimised power losses in the converter related to switching and conduction losses.

The method may comprise switching a bypass circuit between an "on" and an "off' configuration in order to configure the submodule between the bypassed and active configurations, respectively.

The method may comprise operating the tap changer independently on each phase of the transformer. As such, a desired operational mode of the converter may be directed to operation of the individual phases in the converter. For example, where the operational data indicates that there is one voltage phase is unbalanced relative to the other voltage phases, the tap position of the tap changer may be changed only in respect of the identified "unbalanced phase". As such, the system may be able to operate over a wider range of unbalanced conditions, and/or in more extreme unbalanced conditions than would be the case were the described system not to be present. In another example, the converter may comprise three groupings of submodules, each comprising a plurality of submodules and each grouping corresponding to one voltage phase, whereby at least one of the submodules is inoperable and should be set to the bypass configuration such that one of the groupings of submodules is operating with fewer submodules in the active configuration as compared to the other groupings. In this scenario, the converter may function with an unbalanced voltage, and the tap position of the tap changer may be positioned such that the voltage operation in the converter is matched to that of the connected AC electrical network.

A fourth aspect relates to a method for operation (e.g. operational optimisation) of an electrical power converter, comprising:

electrically connecting the electrical power converter to an AC electrical network via a multi-phase transformer, a first transformer side being connected to a MMC and a second transformer side being connected to said AC electrical network;

operating a plurality of submodules of the converter between an active and a bypassed configuration, and operating a tap changer between a plurality of tap positions on each phase of the multi-phase transformer, with each phase of the multi-phase transformer being associated with one of the plurality of tap changers, wherein operation of the tap changer between a plurality of tap positions on a first phase being independent of operation on a second phase;

generating operational data from a sensor arrangement configured to measure operational data of the converter (e.g. through use of a sensor arrangement configured to measure operational data of the converter, through use of an estimation algorithm, or through use of both of the aforementioned);

providing the generated operational data to a control module;

determining a desired operational mode of the converter based on the received operational data and a desired system output, wherein the desired operational mode is defined by the desired tap position of the tap changer on each phase of the multi-phase transformer and optionally a desired number of submodules in the active configuration and a desired number of submodules in the bypassed configuration;

operating and the MMC with the tap changer associated with each phase in the desired tap position, based on the determined desired operational mode, for example such that an unbalanced voltage on one of the first transformer side and the second transformer side is minimised or removed as compared to the other transformer side, and optionally such that power losses in the converter are minimised. Thus, the system may be able to be used in conditions of both balanced and unbalanced operation.

The functionality of the aforementioned systems and/or methods may be combined, such that, the desired operational mode may correspond to the operational mode in which the system power losses are minimised while providing the desired system output, which may relate to an operational mode in which unbalanced operation on one side of the transformer is reduced (e.g. compared to the other side of the transformer, and/or compared to operation in which the tap position is the same for each phase of the multi-phase transformer).

It should be noted that features from the one aspect may equally be applicable to another aspect, despite not having been explicitly described as such.

Figure 1 illustrates an example of a converter connected to a DC and an AC network in the star configuration.

Figure 2A is a first example of two submodules, and Figure 2B is a second example of two submodules.

Figure 3 is an example of a converter with a tap changer positioned on a transformer between the converter and the AC network.

Figure 4 is an example of a converter connected to a DC and an AC network in the delta configuration.

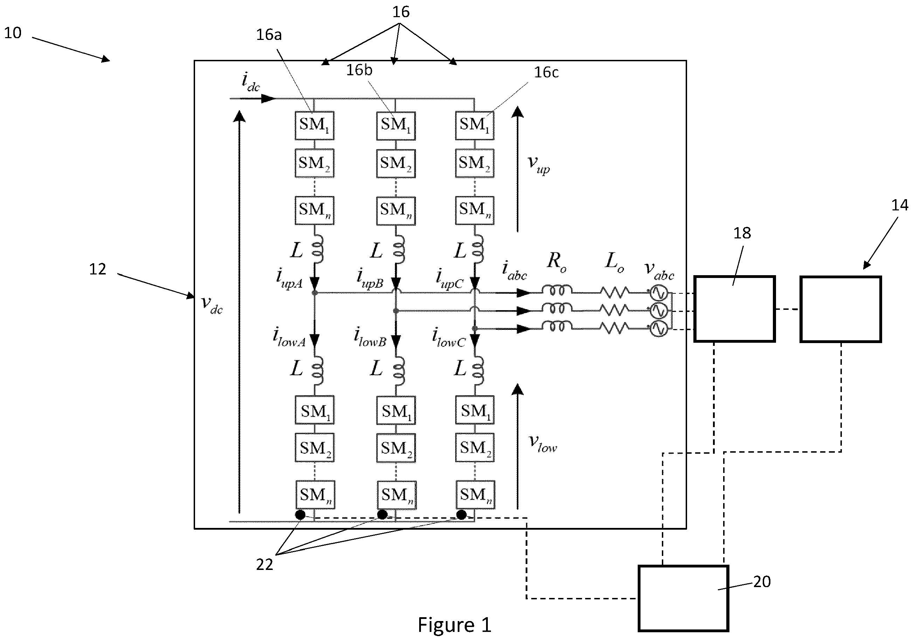

Figure 1 illustrates an example of a converter 10 connected to a DC network 12 and an AC network 14 via a transformer 18. The converter 10 of this example is a voltage converter, and may be used to convert 3-phase AC voltage to DC voltage, and vice versa. More specifically, the illustrated converter is a Modular Multi-level Converter (MMC). Here, the converter is connected to the DC network 12, for example a DC source, simply illustrated as the voltage between two end terminals of the converter 10.

As illustrated, the converter 10 comprises a plurality of submodules 16, which in this example are illustrated as a plurality of arms, in this case six. In this example, the converter 10 is illustrated as having an identical number of submodules 16 on each arm. Here, each of the arms of the converter 10 comprises a plurality of submodules, specifically n submodules although for clarity only three submodules 16 are shown in Figure 1. However, it should be noted that more or fewer submodules 16 may be present on each arm. It may be possible, in some examples, to have each arm comprising four, five, six or more submodules thereon.

The submodules 16 themselves may be in the form of a full bridge, as is the case in this example and as will be described in more detail in the following Figures, or may have another form such as a half bridge. In this example, the submodules are identical, and each has the same rated current and voltage.

The submodules 16 are divided into three groupings 16a, 16b, 16c in this example, with each grouping comprising two arms, and a plurality of submodules 16, connected in series. Each of the groupings is electrically connected to the DC network, as well as a single phase of the transformer 18, which connects the converter 10 to an AC network 14. The connection of the groupings 16a-c to the DC network is in a star configuration, and both of the arms are connected to the DC network 12 in this configuration, such that the converter is connected to the DC network 12 in a double star configuration (e.g. using a double star MMC topology).

In use, each grouping is able to either receive a single phase of the transmission from the AC network 14 via a transformer 18 and convert this into a DC transmission in the DC network 12, or receive DC transmission from the DC network and convert this into a single phase of AC transmission for the AC network 14 via transformer 18. In order to achieve a balanced voltage in the converter, in this example it may be desirable to operate each submodule grouping 16a-c, and each arm of the converter 10, with an identical number of active and bypassed submodules 16.

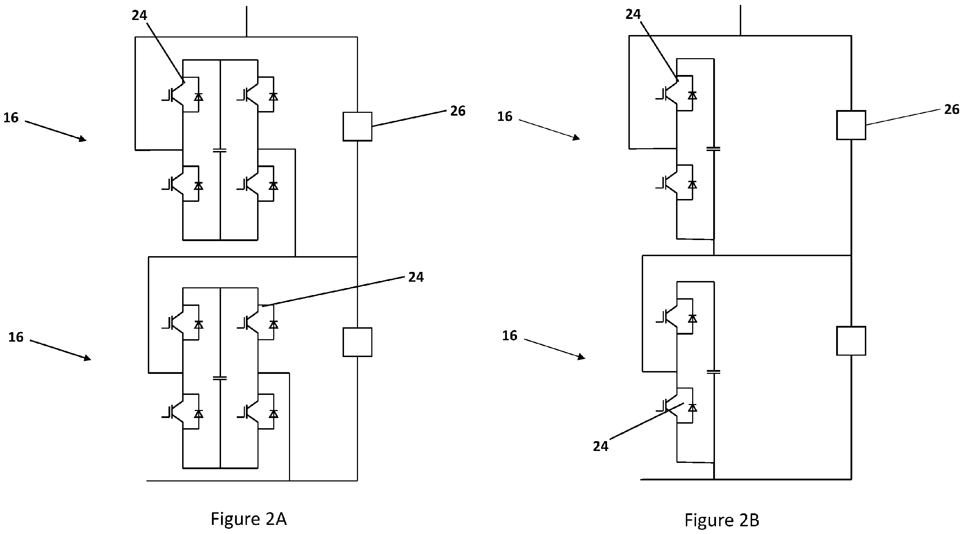

Although not illustrated in Figure 1, in this example each of the submodules 16 comprises a bypass mechanism, which enables each individual submodule 16 to be configured between an active and a bypassed configuration, as will be described in more detail in the following paragraphs and in Figure 2A and 2B.

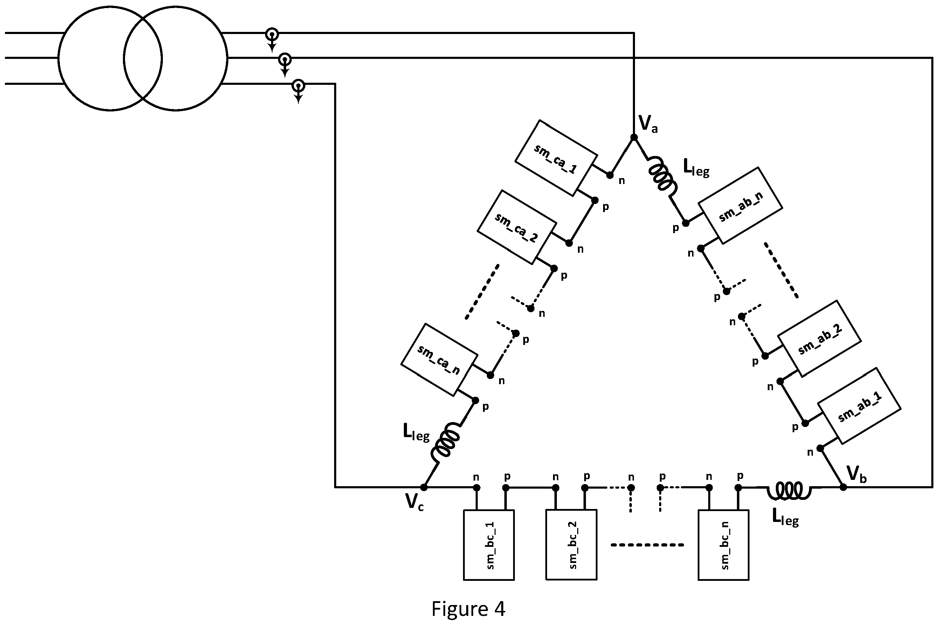

Also illustrated in Figure 1 is a control module 20. Here, the control module 20 is connected to each of the groupings of submodules 16a-c via a sensor arrangement 22, for example via a voltage transformer/transducer, so as to measure the voltage (e.g. the line-to-line voltage) of each of the groupings 16a-c. The control module 20 may also be connected to the groupings 16a-c via a current transducer or transformer so as to measure the current therethrough, and it will be appreciated that other parameters relating to the electrical throughput in the converter may also be measured if desired. It should also be appreciated that the placement of the sensor arrangement 22 shown in Figure 1 is purely exemplary, and in some cases (such as in the case of voltage measurement) the sensor arrangement 22 may additionally or alternatively be located so as to enable the desired measurement. For example, where measurement of voltage in each grouping 16a-c or in each arm is required, the sensor arrangement 22 may be at least partially located in the arm among submodules p, and in the case of Figure 4 (as will be described) at points Va-c. or at a point within the phaselegs of Figure 4. The control module 20 may also be configured to determine a desired operational mode e.g. by recognizing a desired output, e.g. output power that is required of the converter 10, and therefore may be able to determine the required voltage (e.g. line-to-line voltage) and/or current to provide the desired output. The control module 20 may additionally be able to determine the impact of increasing or decreasing the number of modules in the active configuration on the voltage and subsequently the current required in each active module in order to produce the desired output. In some examples, the control module 20 may be termed a valve controller. In some examples, the control module 20 may comprise a plurality of sub-controllers, for example that may correspond to each grouping 16a-c and which may be in communication with the control module 20.

In some examples, the control module 20 may be programmed with an estimation algorithm which may be used to estimate operational parameters such as line-to-line voltage, and which may be used in the case that the sensor arrangement 22 does not provide additional sensors such as those illustrated in Figure 1, or which may be used in the case that the sensor arrangement 22 or at least one sensor therein becomes inoperable. In this case, the sensor arrangement 22 may include at least one sensor, e.g. located in a tap changer (as will be described), or on the primary and/or secondary side of the transformer, in or across a submodule or submodules, and/or having an alternative location to those illustrated in Figure 1 (for instance at the (submodule) DC-side or AC-side), so as to provide data to the control module 20 that may be used to estimate operational data. The estimated operational data may be used additionally or alternatively with the measured operational data to determine a desired operational mode. Estimation, for example line-to-line voltage, may additionally or alternatively be estimated using values of the current in each arm or grouping 16a-c, PWM signals, inductance values in each arm or grouping 16a-c, or the like. As illustrated in Figure 1, the control module 20 may also be in communication with a sensor or sensor arrangement at the AC-network side of the transformer 18 or in the AC-network 14 so as to obtain parameter values form the AC-network side or of the transformer 18 or the AC-network 14, which may be used in the estimation algorithm. For example, grid voltages may be used in the estimation algorithm.

In operation, the control module 20 in combination with the sensor arrangement 22 may be used to measure or determine (e.g. estimate) the voltage and/or current in each of the active submodules 16, and thereby ensure that the submodules 16 are operated within the rated voltage and current capabilities, thus ensuring that the submodules 16 are not damaged by operation at a voltage or current higher than the rated value.

In this example, the control module 20 is also configurable to determine the power losses in the converter 10. This may be achieved by receiving operational data from the sensor arrangement 22, which may be used to determine the power losses in the converter 10. The control module 20 may determine the power losses in the converter through use of the following equation:

$$PL = (a*I^b)*(1+\alpha T) + c*I^d*V^e*f_{sw}*(1+\beta T) \qquad \text{[Equation 1]}$$

where I is the operating current (rms), V is the DC link voltage, T is the temperature, a is the DC gain, b is the DC current quotient, c is a switching loss multiplier, d is the switching current quotient, e is the switching voltage quotient, $f_{sw}$ is the switching frequency, $\alpha$ is the temperature coefficient for conduction losses and $\beta$ is the temperature coefficient for switching losses. If it is then taken into account that the temperature effect is not a parameter that is able to be controlled, this equation may further be simplified to:

$$PL = a*I^b + c*I^d*V^e*f_{sw} \qquad \text{[Equation 2]}$$

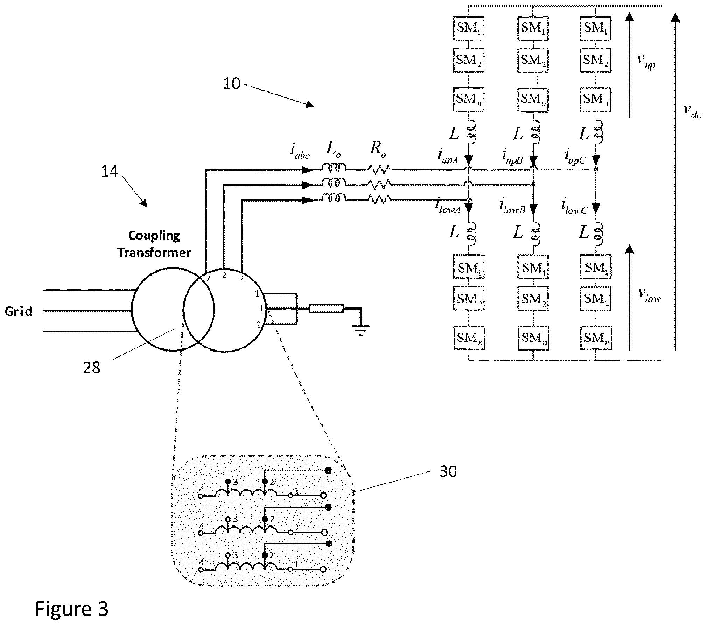

Which consists only of parameters that a user is able to control. The control module 20 may be able to calculate the power losses in the converter 10 through use of the above equations 1 and 2, which may be stored in a memory unit in the control module 20. Since the control module 20 may be able to determine or predict the effect on the measured voltage and current of configuring a submodule 16 to the active configuration or to the bypassed configuration, the control module 20 may be able to calculate a desired operational mode in which the output of the converter remains unchanged, and the number of active and bypassed submodules is selected to modify the voltage across and current through each submodule 16 such that the total converter power losses are minimised. In determining the desired operational mode, in some cases the control module 20 may be configured so as to always select an identical number of active and bypassed submodules 16 in each grouping 16a-c, and in each arm. As will be described in relation to Figure 3, this configuration may be facilitated by use of an on-load tap changer to enable balanced operation of the converter 10 even in cases where an external AC system is experiencing unbalanced operation.

Once the control module 20 has determined the desired operational mode, the control module 20 is configured to either recommend that the converter 10 be configured to the desired operational mode by providing the results of the determined desired operational mode to a user, or by actively reconfiguring the converter 10, for example by reconfiguring at least one submodule 16 between the active configuration and the bypassed configuration, such that the submodules 16, and the groupings of submodules 16a-c, are configured according to the desired operational mode. In such an example, the control module 20 may be capable of operating the bypass mechanism of each submodule 16 so as to configure each submodule 16 between the active and the bypassed configuration. Reconfiguration of the converter 10 may also or additionally comprise reconfiguration of a tap position of a tap changer, as will be described in relation to Figure 3, which may assist in situations such as those in which there is an unbalanced voltage at one or both sides of the transformer 14.

Table 1 provides an example of converter 10 operation with a varying number of submodules. In this example, the converter is in the form of a delta-STATCOM converter, and comprises submodules having a full bridge circuit with an IGBT that is characterised by Equation 1 as previously described. In this case, each arm of the converter 10 comprises 13 submodules. In this case, the submodules 16 may be operating at or near their rated capacity. Here, it can be seen that the losses are minimised when there are 13 active submodules, and 0 bypassed submodules. Such information may be able to be determined by the control module 20, and in this case the desired operational mode would be selected as having all 13 submodules in the active configuration, and 0 submodules in the bypassed configuration.

Table 1: Submodules operated at or near rated capacity

| Number of active SMs | Number of bypassed SMs | Converter line-to-line rms voltage (kV) | Converter delta current (A) | Switching Frequency (Hz) | Bridge Loss (W) | Bypass Loss (W) | Converter output power (MVA) | Total Loss (kW) | Loss (%) |
|---|---|---|---|---|---|---|---|---|---|
| 13 | 0 | 11,92 | 500,0 | 300 | 3026 | 750 | 17,88 | 118,0 | **0,660** |
| 12 | 1 | 11,00 | 500,0 | 300 | 3026 | 750 | 16,50 | 111,2 | 0,674 |
| 11 | 2 | 10,08 | 545,5 | 300 | 3315 | 893 | 16,50 | 114,7 | 0,695 |
| 10 | 3 | 9,17 | 600,0 | 300 | 3664 | 1080 | 16,50 | 119,7 | 0,725 |
| 9 | 4 | 8,25 | 666,7 | 300 | 4097 | 1333 | 16,50 | 126,6 | 0,767 |

(continued)

| Number of active SMs | Number of bypassed SMs | Converter line-to-line rms voltage (kV) | Converter delta current (A) | Switching Frequency (Hz) | Bridge Loss (W) | Bypass Loss (W) | Converter output power (MVA) | Total Loss (kW) | Loss (%) |
|---|---|---|---|---|---|---|---|---|---|
| 8 | 5 | 7,33 | 818,2 | 300 | 5095 | 2008 | 18,00 | 152,4 | 0,847 |

Table 2 provides a further example of converter 10 operation comprising a plurality of submodules - in this case also 13 per arm. Here, the submodules are operating below their rated capacity. In this example, it can be seen that the losses are at a minimum when there are either 10 active and 3 bypassed submodules, or 9 active and 4 inactive submodules. Therefore, the desired operational mode in this example would be one in which there are either 9 or 10 active submodules. In both this case and the case described in Table 1, the voltage of the converter would be matched with that of the connected AC network through use of the tap changer.

Table 2: Submodules operated below rated capacity

| Number of active SMs | Number of bypassed SMs | Converter line-to-line rms voltage (kV) | Converter delta current (A) | Switching Frequency (Hz) | Bridge Loss (W) | Bypass Loss (W) | Converter output power (MVA) | Total Loss (kW) | Loss (%) |
|---|---|---|---|---|---|---|---|---|---|
| 12 | 1 | 11,00 | 50,0 | 300 | 310 | 8 | 1,65 | 11,2 | 0,678 |
| 13 | 0 | 11,92 | 46,2 | 300 | 288 | 6 | 1,65 | 11,2 | 0,681 |
| 11 | 2 | 10,08 | 54,5 | 300 | 337 | 9 | 1,65 | 11,2 | 0,677 |
| 10 | 3 | 9,17 | 60,0 | 300 | 368 | 11 | 1,65 | 11,1 | **0,675** |
| 9 | 4 | 8,25 | 66,7 | 300 | 407 | 13 | 1,65 | 11,1 | **0,675** |
| 8 | 5 | 7,33 | 69,2 | 300 | 422 | 14 | 1,52 | 10,3 | 0,679 |

Figure 2A and Figure 2B illustrate an example of two submodules 16 connected in series. In Figure 2A, the submodules 16 comprise a full bridge circuit, each comprising four insulated gate bipolar transistors (IGBTs) 24. It should be noted that the submodules may comprise a half bridge circuit instead, and this is illustrated in Figure 2B. Additionally illustrated are two bypass mechanisms 26, each connected in parallel to the AC terminals of the full bridge circuit of the respective submodule 16. Each bypass mechanism 26 is in this example in the form of an electrical switch, such as a thyristor (in particular may be two antiparallel connected thyristors) or vacuum contactor, and may be configured to an "on" configuration in order to bypass the full bridge circuit, thereby configuring the submodule 16 to the bypassed configuration. When it is desired to configure the submodule 16 to the active configuration, the bypass mechanism 26 may be configured from the "on" configuration to the "off' configuration, thereby preventing flow of electricity though the bypass mechanism 26.

Figure 3 illustrates the system, and in particular the transformer 14 thereof, in further detail. The system comprises in this example a tap changer 28 (or an arrangement of tap changers 28), specifically an on-load tap changer. A schematic view 30 of the electrical circuit of the arrangement of tap changers 28 is provided, which illustrates that this arrangement of tap changers 28 is configurable to modify the tap position of each of three transformer windings. In some examples, the tap position for each of the three windings must be changed together such that the tap position for each winding of the transformer 14 is the same. However, in the described example, the tap position of each winding is able to be changed independently of each other winding.

By modifying the tap position of the arrangement of tap changers 28, the voltage of the converter 10 may be able to be matched to that of an external AC network (not illustrated in Figure 3). As such, the converter may be operated at a different voltage than the AC network, and the desired operational mode may be selected based on a voltage in the submodules 16 that is different to that in the AC network, thereby greatly increasing the flexibility of operation of the converter 10, as well as the potential to reduce power losses therein.

The arrangement of tap changers 28 may be additionally used to reduce power losses in cases where there is an unbalanced voltage either in the converter or in the AC network, and/or also to improve the availability of the system.

In the case where there exists an unbalanced voltage on the second side of the transformer (e.g. in the AC network), the arrangement of tap changers 28 may be used to ensure that this unbalanced voltage is not passed on to the converter 10, and the converter 10 is able to operate in a balanced condition. For example, should the voltage of one phase be reduced compared to the voltage of the other phases, then the tap position of the arrangement of on-load tap changers 28 may be changed for a single-phase winding of the transformer to balance the voltage on the first side (e.g. the converter side) of the transformer. In doing so, the system is able to be used with a greater range of availability, despite there being an unbalanced voltage on one side of the transformer, and may also be used to reduce losses therein, for example those experienced as a result of neutral displacement of the transformer.

In the case where there exists an unbalanced voltage in the converter, the arrangement of tap changers 28 may be configured such that the voltage is able to be matched (or made closer) in each phase to the voltage of a connected AC network, such that the converter is able to continue being used.

An unbalanced voltage in the converter 10 may arise in cases where one grouping 16a-c of submodules 16, and/or one arm of the converter 10 comprises a larger number of inoperable or defective submodules compared to another grouping 16a-c and/or arm. In this case, where there are no, or an insufficient number of, redundant healthy submodules to be operated in place of the inoperable submodule 16 or submodules 16, it is then necessary to bypass "healthy" (e.g. non-defective/inoperable) submodules in the other groupings 16a-c and/or arms in order to achieve balance in the converter 10. Assuming that the remaining healthy submodules 16 are not being operated beyond their rated capacity, this can result in the converter 10 having to run below capacity, in which a desired output is not able to be reached, and/or in a configuration in which power losses are not able to be optimized, despite there being sufficient healthy submodules to do so.

To solve this problem, the tap changers 28 illustrated in Figure 3 may be operated such that the tap position on only one phase can be modified. This therefore allows the converter 10 to function with an unbalanced voltage, which is then able to be matched to (or made closer to) the voltage of the connected AC network. This means that it is possible for the converter 10 to function with one grouping 16a-c and/or arm having fewer operable submodules 16 compared to the other groupings 16a-c/arms. Thus, there is no requirement to bypass healthy submodules 16, therefore increasing the flexibility of the system and the ability of the system to minimize power losses therein. It should be noted that, while the arrangement of tap changers 28 is illustrated as having the tap position as being the same for all phases, it is also possible to have the tap position as being different in each phase if necessary.

In some examples, the control module 20 receives operational data from the sensor arrangement 22 that may be used to detect unbalanced operation in at least one of the first transformer side and the second transformer side. Detection of unbalanced operation may be achieved by a comparison of each voltage phase on the first and second transformer sides e.g. with an expected voltage. The control module 20 is therefore able to analyze the data received from the sensor arrangement 22 to detect unbalanced operation, for example by determining that there is a voltage or current unbalance on either or both of the first and second side of the transformer 14. For this purpose the sensor arrangement 22 may comprise a sensor or a plurality of sensors configured to provide operational data relating to the transformer 14, for example voltage and/or current of each phase of the transformer, and the operational data may be measured and provided to the control module 20, which may then determine if unbalanced operation is present, and the degree to which it is present. Alternatively or additionally, the control module may be provided with data (which may be considered operational data) that relates to the number of submodules (e.g. number of submodules in each arm of the converter) that are in the active and/or bypassed configuration, which may assist or enable the control module to determine if unbalanced operation is present. Further alternatively or additionally, the control module 20 may input the received data into an estimation algorithm which may be used to determine via estimation of selected values (e.g. line-to-line voltage) whether unbalanced operation is present, and the degree to which it is present.

If the control module determines that either the first or second side of the transformer 14 is experiencing unbalanced operation, then the control module 20 is configured to either recommend that the converter 10 be configured to the desired operational mode by providing the results of the determined desired operational mode to a user, or by actively reconfiguring the converter 10, e.g. by changing the tap position of the tap changer 28 for at least one phase, or a plurality of phases, so as to balance the voltage on the AC network side of the transformer 14 with the voltage on the converter side. It is also conceivable that the desired operational mode may involve reconfiguring at least one submodule 16 between the active and the bypassed configuration (e.g. from the active to the bypassed configuration, or vice versa). Operation may therefore be enabled in situations of balanced operation on both sides of the transformer, and in situations in which operation on one or both sides of the transformer is unbalanced.

Figure 4 illustrates an alternative converter 10 having the delta configuration. Here, many of the features are the same as have been previously described. For example, the converter 10 comprises a plurality of submodules 16, which may be the same as those described in Figure 2A or 2B. Additionally, the system comprises a tap changer 28, which is in common with the description of Figure 3. Although connected in the delta configuration, the same principles as applied to the star connected converter in Figures 1 and 3 may also apply to the delta connected converter 10 of Figure 4, as will be understood by the skilled reader.

It is additionally pointed out that "comprising" does not rule out other elements, and "a" or "an" does not rule out a multiplicity. It is also pointed out that features that have been described with reference to one of the above exemplary embodiments may also be disclosed as in combination with other features of other exemplary embodiments described above. Reference signs in the claims are not to be regarded as restrictive.

**Reference Signs**

| | |
|---|---|
| 10 | converter |
| 12 | DC network |
| 14 | AC network |
| 16 | submodules |
| 16a, 16b, 16c | groupings of submodules |
| 18 | transformer |
| 20 | control module |
| 22 | sensor arrangement |
| 24 | insulated gate bipolar transistor (IGBT) |
| 28 | tap changer |
| 30 | schematic view |

**Claims**

1. An operational optimisation system for a Modular Multilevel Converter (MMC), comprising:

a converter (10) comprising a plurality of submodules (16), each of the plurality of submodules (16) configurable between an active and a bypassed configuration;
a transformer (18) for connecting the converter to an AC electrical network (14) comprising a first transformer side and a second transformer side, wherein the first transformer side is electrically connected to the converter (10), and the second transformer side is electrically connected to an AC electrical network (14);
a tap changer (28) configurable to connect to, and selectably alternate between, a plurality of tap positions on the transformer (18);
a sensor arrangement (22) comprising at least one sensor configured to measure operational data relating to the converter (10);
a control module (20) for receiving operational data from the sensor arrangement (22) and configured to determine a desired operational mode of the system based on the operational data received from the sensor arrangement (22) and a desired system output;
wherein the desired operational mode is defined by the number of the plurality of submodules (16) in the active configuration, the number of submodules (16) in the bypassed configuration, and the tap position of the tap changer (28), and corresponds to the operational mode in which the system power losses are minimised while providing the desired system output.

2. The power loss optimisation system of claim 1, wherein each of the plurality of submodules (16) comprises a full bridge or a half bridge circuit.

3. The power loss optimisation system of claim 1 or 2, wherein each of the plurality of submodules (16) comprises an insulated gate bipolar transistor (IGBT) (24).

4. The power loss optimisation system of any preceding claim, wherein each submodule (16) comprises a bypass mechanism.

5. The power loss optimisation system of any preceding claim, wherein the sensor arrangement (22) comprises a current measuring device, a voltage measuring device and a temperature gauge.

6. The power loss optimisation system of any preceding claim, wherein the control module (20) is configured to determine the power losses in the system for a plurality of operational modes and select the operational mode having the lowest power losses as the desired operational mode.

7. The power loss optimisation system of claim 6, wherein the power losses in the system are determined using the

following equation:

$$PL = (a*I^b)*(1+\alpha T) + c*I^d*V^e*f_{sw}*(1+\beta T)$$

where I is the operating current (rms), V is the DC link voltage, T is the temperature, a is the DC gain, b is the DC current quotient, c is a switching loss multiplier, d is the switching current quotient, e is the switching voltage quotient, $f_{sw}$ is the switching frequency, $\alpha$ is the temperature coefficient for conduction losses and $\beta$ is the temperature coefficient for switching losses.

8.  The power loss optimisation system according to any preceding claim, wherein the sensor arrangement (22) comprises a voltage measuring device configured to measure the voltage of an AC electrical network connected to the transformer (18).

9.  The power loss optimisation system according to any preceding claim, wherein the transformer (18) is a three-phase transformer and the tap changer (28) is configured to operate independently on each phase provided by the three-phase transformer.

10. The operational optimisation system according to any preceding claim, wherein the transformer (18) is a three-phase transformer and the desired operational mode corresponds to an operational mode in which power losses are minimised and the operation of at least one of the first transformer side and the second transformer side is unbalanced.

11. A method for operational optimisation of an electrical power converter (10), comprising:

    electrically connecting the electrical power converter (10) to an AC electrical network (14) via a transformer (18);
    operating a plurality of submodules (16) of the converter (10) between an active and a bypassed configuration, and operating a tap changer (28) between a plurality of tap positions of the transformer (18);
    generating operational data from a sensor arrangement (22) configured to measure operational data of the converter (10);
    providing the generated operational data to a control module (20);
    determining a desired operational mode of the converter (10) based on the received operational data and a desired system output, wherein the desired operational mode is defined by a desired number of submodules (16) in the active configuration, a desired number of submodules (16) in the bypassed configuration, and the tap changer (28) having a desired tap position;
    operating each of the plurality of submodules (16) in either the active or bypassed configuration, and the tap changer (28) in the desired tap position, based on the determined desired operational mode such that power losses in the converter (10) are minimized.

12. The method of claim 12, comprising determining the power loss for a plurality operational modes providing the desired system output, and selecting the operational mode having the lowest power loss as the desired operational mode.

13. A system for operating a Modular Multilevel Converter (MMC), comprising:

    a converter (10) comprising a plurality of submodules (16), each of the plurality of submodules (16) configurable between an active and a bypassed configuration;
    a multi-phase transformer (18) for connecting the converter (10) to an AC electrical network (14) comprising a first transformer side and a second transformer side, wherein the first transformer side is electrically connected to the converter (10), and the second transformer side is electrically connected to an AC electrical network (14);
    a plurality of tap changers (28) configurable to connect to, and selectably alternate between, a plurality of tap positions on the multi-phase transformer (18), with each phase of the multi-phase transformer (18) being associated with one of the plurality of tap changers (28), and each of the plurality of tap changers (28) being configurable to alternate between a plurality of tap positions independently of each of the other of the plurality of tap changers (28);
    a sensor arrangement (22) comprising at least one sensor configured to measure operational data relating to the converter (10);
    a control module (20) for receiving operational data from the sensor arrangement (22) and configured to detect, using the received operational data, unbalanced operation in at least one of the first transformer side and the second transformer side, and to determine a desired operational mode of the system based on the operational data received from the sensor arrangement (22) and a desired system output;

wherein the desired operational mode is defined by the tap position of each of the tap changers (28) on each phase of the multi-phase transformer (18).

14. A method for operation of an electrical power converter (10), comprising:

electrically connecting the electrical power converter (10) to an AC electrical network (14) via a multi-phase transformer (18), a first transformer side of the multi-phase transformer (18) being connected to a modular Multi-Level Converter (MMC) and a second transformer side being connected to said AC electrical network (14);

operating a plurality of submodules (16) of the converter (10) between an active and a bypassed configuration, and operating a plurality of tap changers (28) between a plurality of tap positions, with each phase of the multi-phase transformer (18) being associated with one of the plurality of tap changers (28), wherein operation of each tap changer (28) is independent of operation of each other tap changer (18);

generating operational data from a sensor arrangement (22) configured to measure operational data of the converter (10);

providing the generated operational data to a control module (20);

determining a desired operational mode of the converter (10) based on the received operational data and a desired system output, wherein the desired operational mode is defined by the tap position of the tap changer (28) on each phase of the multi-phase transformer (18) having a desired tap position;

operating and the MMC with the tap changer (28) associated with each phase in the desired tap position, based on the determined desired operational mode.

15. The method for operational of claim 14, wherein the desired system output corresponds to the tap position of the tap changer (28) associated with each phase being positioned such that the voltage on the first side of the transformer (18) is balanced with the voltage on the second side of the transformer (18).

Figure 1

Figure 2B

Figure 2A

Figure 3

Figure 4

EP 4 589 833 A1

Europäisches
Patentamt

European
Patent Office

Office européen
des brevets

# EUROPEAN SEARCH REPORT

**Application Number**

EP 24 15 2616

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/161852 A1 (ISHIDA KEISUKE [JP] ET AL) 21 May 2020 (2020-05-21) * figures 3,4 * * paragraph [0029] * * paragraph [0088] * | 1-15 | INV. H02M7/483 |
| A | US 2016/036314 A1 (KOYANAGI KIMIYUKI [JP] ET AL) 4 February 2016 (2016-02-04) * figures 1,3 * | 1-15 | |
| A | ZECCHINO ANTONIO ET AL: "Experimental testing and model validation of a decoupled-phase on-load tap-changer transformer in an active network", IET GENERATION, TRANSMISSION&DISTRIBUTION, IET, UK, vol. 10, no. 15, 17 November 2016 (2016-11-17), pages 3834-3843, XP006059171, ISSN: 1751-8687, DOI: 10.1049/IET-GTD.2016.0352 * figure 2 * | 1-15 | |

| | | |
|---|---|---|
| | | **TECHNICAL FIELDS SEARCHED (IPC)** |
| | | H02M |

The present search report has been drawn up for all claims

| Place of search | Date of completion of the search | Examiner |
|---|---|---|
| The Hague | 10 June 2024 | Gotzig, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 2616

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2024

| Patent document cited in search report | Publication date | Patent family member(s) | Publication date |
|---|---|---|---|
| US 2020161852 A1 | 21-05-2020 | EP 3637573 A1 | 15-04-2020 |
| | | JP 6359205 B1 | 18-07-2018 |
| | | JP WO2018225208 A1 | 27-06-2019 |
| | | US 2020161852 A1 | 21-05-2020 |
| | | WO 2018225208 A1 | 13-12-2018 |
| US 2016036314 A1 | 04-02-2016 | EP 2978114 A1 | 27-01-2016 |
| | | JP 6009651 B2 | 19-10-2016 |
| | | JP WO2014148100 A1 | 16-02-2017 |
| | | US 2016036314 A1 | 04-02-2016 |
| | | WO 2014148100 A1 | 25-09-2014 |

EPO FORM P0459

For more details about this annex : see Official Journal of the European Patent Office, No. 12/82